(19) Europäisches Patentamt
European Patent Office
Office européen des brevets

(11) Publication number: 0 293 484 B1

# (12) EUROPEAN PATENT SPECIFICATION

(45) Date of publication of patent specification: **01.07.92** (51) Int. Cl.$^5$: **B23H 1/02**

(21) Application number: **87907671.9**

(22) Date of filing: **18.11.87**

(86) International application number:
**PCT/JP87/00892**

(87) International publication number:
**WO 88/04211 (16.06.88 88/13)**

## (54) APPARATUS FOR DISCHARGE MACHINING.

(30) Priority: **11.12.86 JP 293551/86**

(43) Date of publication of application:
**07.12.88 Bulletin 88/49**

(45) Publication of the grant of the patent:
**01.07.92 Bulletin 92/27**

(84) Designated Contracting States:
**CH DE FR GB IT LI**

(56) References cited:
**JP-A-61 125 721**

(73) Proprietor: **FANUC LTD.**
**3580, Shibokusa Aza-Komanba, Oshino-mura**
**Minamitsuru-gun, Yamanashi 401-05(JP)**

(72) Inventor: **OBARA, Haruki 844-7, Hashimoto**
**Sagamihara-shi**
**Kanagawa 229(JP)**

(74) Representative: **Brunner, Michael John et al**
**GILL JENNINGS & EVERY 53-64 Chancery Lane**
**London WC2A 1HN(GB)**

**EP 0 293 484 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an improvement applicable to an electrical discharge machining equipment. More specifically, this invention relates to an improvement applicable to a means for sensing the voltage across the gap in which electrical discharges happen for electrical discharge machining.

It is required to maintain the geometrical length of the gap in which electrical discharges happen for electrical discharge machining, at a constant value, for the purpose to maintain a stable intensity for an electric current flowing in the gap for electrical discharge machining. To satisfy this requirement, it is essential to employ a means for sensing the voltage across the gap in which electrical discharges happen for electrical discharge machining (Hereinafter referred to as an electric discharge machining gap voltage sensing means).

Presented below will be a description of an electrical discharge machining equipment described paying particular attention to an electric discharge machining gap voltage sensing means.

Referring to Fig. 1, a machining electrode 1 is allowed to be a rod electrode (which is employed for an electrical discharge machining equipment for producing a recess), as shown in the drawing, or to be a wire electrode (not shown but employable for wire electrode type electrical discharge machining). A gap 12 in which electric discharges happen (hereinafter referred to as a machining gap) remains between the machining electrode 1 and a workpiece 2 to allow electric discharges therein. A means 3 for generating a high frequency pulse wave electric voltage is allowed to select variable wave forms. An instrument current transformer or the like 4 is designed to be a means for sensing the variation rate of electric current, which means is actually employed as a means for sensing an inductance fall component in this example. An electric discharge machining gap voltage is sensed at a point 5 at which the circuit of the high frequency pulse wave electric voltage generating means 3 is connected to the rod machining electrode 1, in the case of electrical discharge machining for producing a recess in the workpiece 2. On the other hand, an electric discharge machining gap voltage is sensed by means of an electric feeder means or the like (not shown), in the case of wire electrode type electrical discharge machining in which a wire electrode is employed.

An electric discharge machining gap voltage sensed at any of the points described above, contains not only the genuine value of the electric discharge machining gap voltage but also the error voltage components including the inductance fall component and the resistance fall component which occur between the machining electrode 1 and the electric discharge machining gap voltage sensing point 5 as well as the inductance fall component and the resistance fall component which occur between the workpiece 2 and the other electric discharge machining gap voltage sensing point (which is not shown in the drawing, but is one terminal of the instrument current transformer 4 or the ground point in this example). Particularly in the case of a wire electrode type electrical discharge machining equipment, the inductance fall component is so large that the inductance fall component cannot be ignored. Therefore, it is required to sense the error voltage components and to subtract the voltage amount from the voltage between the two points at which an electric discharge machining gap voltage are sensed (between one end of the machining electrode 1 and the ground point in this embodiment), for the purpose to apply correction to the apparent electric discharge machining gap voltage sensed in the manner described above and to obtain a correct or genuine electric discharge machining gap voltage actually applied across the electrical discharge machining gap.

A means for removing the influence of the aforementioned error voltage components can be realized, by employing a principle that the inductance fall component accounting for the major portion of the error voltage components is proportional to the variation rate of an electric current. Therefore, an electrical discharge machining equipment available in the prior art has an electric discharge machining gap voltage correcting means 6 having a function to subtract the inductance fall component which is determined following the output signal of the electric current variation rate sensing means 4 such as an instrument current transformer or the like, from the apparent electric discharge machining gap voltage (the voltage difference between the potential at one end of the machining electrode 1 and the ground potential, in this example) sensed in the aforementioned manner. The electric discharge machining gap voltage correcting means 6 is inherently an adder, and to a first element 61 thereof is applied the apparent electric discharge machining gap voltage (the voltage difference between the potential at one end of the machining electrode 1 and the ground potential, in this example) sensed in the aforementioned manner, and to a second element 62 thereof is applied the output signal of the electric current variation rate sensing means 4. Since the output signal of the electric current variation rate sensing means 4 is in a negative value, the electric discharge machining gap voltage correcting means 6 actually conducts a subtraction.

Adjustment of the second element 62 is readily possible by adjusting the output signal of the electric discharge machining gap voltage correcting means 6 to 0 (zero), under the conditions that the machining gap 12 is short-circuited and a high frequency pulse voltage is applied between the point 5 and one end of the instrument current transformer 4.

Although the electric discharge machining gap voltage correcting means 6 is remarkably effective to remove the harmful effects of the inductance fall component, the harmful effects of the resistance fall component cannot be ignored, particularly in the case where a thin wire electrode or a tungsten wire electrode is employed.

For such cases where the harmful effects of the resistance fall component can not be ignored, a development is required for a more accurate electric discharge machining gap voltage sensing means which is further provided with a means for correcting the error caused by the resistance fall component.

The object of this invention is to satisfy the aforementioned requirement and to provide an electrical discharge machining equipment provided with a more accurate electric discharge machining gap voltage sensing means, the voltage sensing means being further provided with a means for removing the error caused by the resistance fall component.

According to the present invention, there is provided an electrical discharge machining equipment having an electric discharge machining gap voltage sensing means comprising:

a machining electrode;

a high frequency pulse voltage generating means for supplying high frequency voltage pulses across a machining gap maintained between the machining electrode and a workpiece to be machined;

means for sensing the variation rate of the electric current which flows through the machining gap; and,

means for correcting the electric discharge machining gap voltage by subtracting the inductance fall component, which is determined following the electric current variation rate sensed by means of the electric current variation rate sensing means, from the electric discharge machining gap voltage representing the voltage difference sensed across the machining gap; characterised by:

a machining current resistance fall component sensing means; and,

the electric discharge machining gap voltage correcting means further comprising an element for subtracting the machining current resistance fall component, sensed by the machining current resistance fall component sensing means, from the electric discharge machining gap voltage representing the voltage difference sensed across the machining gap.

Preferably, the machining current resistance fall component sensing means is a resistor connected in series with the electric current variation rate sensing means.

Alternatively, the machining current resistance fall component sensing means comprises an integrator for integrating the electric current variation rate sensed by the electric current variation rate sensing means. In this case, there may additionally be provided a second electric current variation rate sensing means, the integrator integrating the electric current variation rate sensed by the second electric current variation rate sensing means.

A more detailed description will be presented below for three electrical discharge machining equipments in accordance with the three embodiments of this invention, referring to the drawings tabulated below:

Fig. 1 is a schematic drawing of an electrical discharge machining equipment having an electrical discharge machining gap voltage sensing means available in the prior art,

Fig. 2 is a schematic drawing of an electrical discharge machining equipment having an electrical discharge machining gap voltage sensing means in accordance with the first embodiment of this invention,

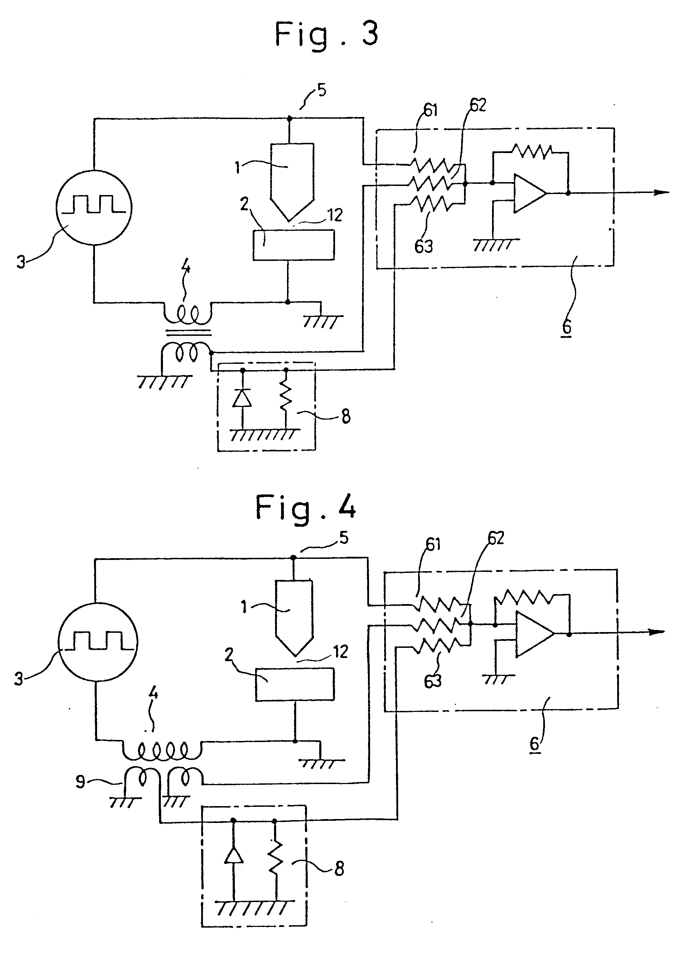

Fig. 3 is a schematic drawing of an electrical discharge machining equipment having an electrical discharge machining gap voltage sensing means in accordance with the second embodiment of this invention, and

Fig. 4 is a schematic drawing of an electrical discharge machining equipment having an electrical discharge machining gap voltage sensing means in accordance with the third embodiment of this invention.

## FIRST EMBODIMENT

Referring to Fig. 2, a machining electrode 1 can be a rod electrode (which is employed for an electrical discharge machining equipment for producing a recess in a workpiece 2), as shown in the drawing, or a wire electrode (not shown, but employed for wire electrode type electrical discharge machining). A gap 12, in which electric discharges occur, is maintained between the machining electrode 1 and the workpiece 2 to allow electric discharges happen therein. A means 3 for generating a high frequency pulse wave electric voltage is allowed to select variable wave forms. An instrument current transformer or the like 4 is designed to be a means for sensing the variation rate of electric current, which means is actually employed as a means for sensing an inductance fall component. An electric discharge machining gap voltage is sensed at a point 5 at which the circuit of the high frequency pulse wave electric voltage generating means 3 is connected to the rod machining electrode 1, in the case of electrical discharge machining for producing a recess in the workpiece 2. On the other hand, an electric discharge machining gap voltage is sensed by means of an electric feeder means or the like (not shown), in the case of wire electrode type electrical discharge machining.

A resistor 7 is the resistance fall component sensing means which is essential for the electrical discharge machining equipment in accordance with the first embodiment of this invention. The electric discharge machining gap voltage correcting means 6 is inherently an adder, and to a first element 61 thereof is applied the apparent electric discharge machining gap voltage sensed in the aforementioned manner, to a second element 62 thereof is applied the output signal of the electric current variation rate sensing means (4) which signal represents the resistance fall component, and to a third element 63 thereof is applied the output signal of resistance fall component sensing means 7. Since both the inductance fall component and the resistance fall component are subtracted from the apparent electric discharge machining gap voltage, the apparent electric discharge machining gap voltage is corrected to be converted to a signal having the genuine value representing the electric discharge machining gap voltage.

Adjustment of the second and third elements 62 and 63 is readily possible by adjusting the output signal of the electric discharge machining gap voltage correcting means 6 to 0 (zero), under the conditions that the machining gap is short-circuited and a high frequency pulse voltage is applied between the points 5 and one end of the resistor 7.

## SECOND EMBODIMENT

The difference between this embodiment and the first embodiment is that the resistor 7 which acts as the resistance fall component sensing means in the first embodiment, is replaced by an integrator 8 which integrates the output signal of the inductance fall sensing means 4 (the electric current variation rate sensing means such as an instrument current transformer). This is based on a principle that since both inductance and resistance are originated from a circuit element (a wire), and since the resistance of a wire is proportional to the inductance of the wire, integration of an inductance fall becomes equivalent to a resistance fall.

In the same manner as is in the aforementioned embodiments, adjustment of the second and third elements 62 and 63 is readily possible by adjusting the output signal of the electric discharge machining gap voltage correcting means 6 to 0 (zero), under the conditions that the machining gap is short-circuited and a high frequency pulse voltage is applied between the point 5 and one end of the instrument current transformer 4.

## THIRD EMBODIMENT

The difference between this embodiment and the first embodiment is, similarly to the difference between the first embodiment and the second embodiment, that the resistor 7 which acts as the resistance fall component sensing means in the first embodiment is replaced by an integrator 8 which integrates the output signal of the inductance fall sensing means 4 (the electric current variation rate sensing means such as an instrument current transformer). On the other hand, the difference between this embodiment and the second embodiment is that another independent electric current variation rate sensing means 9 such as an independent instrument current transformer is further provided, in addition to the integrator 8.

The basic principle on which this third embodiment functions is similar to that on which the second embodiment functions. In other words, since both inductance and resistance are originated from a circuit element (a wire) and since the resistance of a wire is proportional to the inductance of the wire, integration of an inductance fall is equivalent to a resistance fall. In this third embodiment, however, an independent instrument current transformer 9 acting as an electric current variation rate sensing means is particularly effective to improve the accuracy of the correction of the electric discharge machining gap voltage.

The adjustment of the second and third elements 62 and 63 is possible in the same manner as was described above.

Since any of the aforementioned electrical discharge machining equipments having an electric discharge machining gap voltage sensing means in accordance with this invention is provided with an electric discharge machining gap voltage correcting means provided not only with a means for subtracting the inductance fall component determined following the electric current variation rate signal sensed by an electric current variation rate sensing means such as an instrument current transformer, from the apparent electric discharge machining gap voltage sensed across the machining gap, but also a means for subtracting the resistance fall component sensed by a resistance fall component sensing means such as a resistance, removal is realized not only for the error caused by the inductance fall component but also for the error caused by the resistance fall component, thus enabling the electrical discharge machining equipment to sense an accurate value of electric discharge machining gap voltage.

The foregoing description has clarified that this invention has successfully provided an electrical discharge machining equipment provided a more accurate electric discharge machining gap voltage sensing means which has correcting means for the error caused not only by the inductance fall component but also by the resistance fall component.

## Claims

**1.** An electrical discharge machining equipment having an electric discharge machining gap voltage sensing means comprising:

a machining electrode (1);

a high frequency pulse voltage generating means (3) for supplying high frequency voltage pulses across a machining gap (12) maintained between the machining electrode (1) and a workpiece (2) to be machined;

means (4) for sensing the variation rate of the electric current which flows through the machining gap (12); and,

means (6) for correcting the electric discharge machining gap voltage by subtracting the inductance fall component, which is determined following the electric current variation rate sensed by means of the electric current variation rate sensing means (4), from the electric discharge machining gap voltage representing the voltage difference sensed across the machining gap (12); characterised by:

a machining current resistance fall component sensing means (7,8,9); and,

the electric discharge machining gap voltage correcting means (6) further comprising an element (63) for subtracting the machining current resistance fall component, sensed by the machining current resistance fall component sensing means (7,8,9), from the electric discharge machining gap voltage representing the voltage difference sensed across the machining gap (12).

**2.** An electrical discharge machining equipment according to claim 1, wherein the machining current resistance fall component sensing means is a resistor (7) connected in series with the electric current variation rate sensing means (4).

**3.** An electrical discharge machining equipment according to claim 1, wherein the machining current resistance fall component sensing means comprises an integrator (8) for integrating the electric current variation rate sensed by the electric current variation rate sensing means (4).

**4.** An electrical discharge machining equipment according to claim 3, further comprising a second electric current variation rate sensing means (9), the integrator (8) integrating the electric current variation rate sensed by the second electric current variation rate sensing means (9).

## Revendications

**1.** Équipement d'usinage par étincelage ayant un moyen pour déterminer la tension sur l'espacement d'usinage par étincelage comprenant :

une électrode d'usinage (1);

un moyen (3) pour générer des impulsions de tension à haute fréquence pour fournir des impulsions de tension à haute fréquence à un espacement d'usinage (12) maintenu entre l'électrode d'usinage (1) et la pièce (2) à usiner;

un moyen (4) pour déterminer la vitesse de variation du courant électrique circulant dans l'espacement (12) d'usinage; et

un moyen (6) pour corriger la tension sur l'espacement d'usinage par étincelage en soustrayant le composant chute d'inductance, qui est déterminé d'après la vitesse de variation du courant électrique déterminée par un moyen (4) pour déterminer la vitesse de variation du courant électrique, de la tension sur l'espacement d'usinage par étincelage représentant la différence de tension déterminée sur l'espacement d'usinage (12); caractérisé par :

un moyen (7, 8, 9) pour déterminer le composant chute de résistance du courant d'usinage;

un moyen (6) pour corriger la tension sur l'espacement d'usinage par étincelage, comprenant en outre un élément (63) pour soustraire le composant chute de résistance du courant d'usinage, déterminé par le moyen (7, 8, 9) pour déterminer le composant chute de résistance du courant d'usinage, de la tension sur l'espacement d'usinage par étincelage représentant la différence de tension déterminée sur l'espacement d'usinage (12).

**2.** Équipement d'usinage par étincelage selon la revendication 1, où le moyen pour déterminer la chute de résistance du courant d'usinage est une résistance (7) connectée en série avec le moyen (4) pour déterminer la vitesse de variation du courant électrique.

**3.** Équipement d'usinage par étincelage selon la revendication 1, où le moyen pour déterminer le composant chute de résistance du courant d'usinage comprend un intégrateur (8) pour intégrer la vitesse de variation du courant électrique, déterminée par le moyen pour déterminer la vitesse de variation du courant électrique.

4. Équipement d'usinage par étincelage selon la revendication 3, comprenant en outre un second moyen pour déterminer la vitesse de variation du courant électrique (9), l'intégrateur (8) intégrant la vitesse de variation du courant électrique déterminée par le second moyen (9) pour déterminer la vitesse de la variation du courant électrique.

## Patentansprüche

1. Gerät für eine elektrische Entladungsmaschine, das eine Einrichtung zum Erfassen der Spannung längs eines für elektrische Entladungen vorgesehenen Arbeitsspalts aufweist, mit
   einer Arbeitselektrode (1);
   einer HF-Spannungsimpuls-Erzeugungseinrichtung (3) zum Liefern von HF-Spannungsimpulsen an einen Arbeitsspalt (12), der zwischen der Arbeitselektrode (1) und einem maschinell zu bearbeitenden Werkstück (2) aufrechterhalten wird;
   einer Einrichtung (4) zum Erfassen der Änderungsrate des elektrischen Stromes, der durch den Arbeitsspalt (12) fließt; und
   einer Einrichtung (6) zum Korrigieren der am Arbeitsspalt für die elektrischen Entladungen anliegenden Spannung durch Subtraktion der Induktivitätsabfallkomponente, die der von der Einrichtung (4) zum Erfassen der Änderungsrate des elektronischen Stromes erfaßten Änderungsrate des elektrischen Stromes folgend bestimmt wird, von der Spannung längs des Arbeitsspalts für die elektrischen Entladungen, die die längs des Arbeitsspalts (12) erfaßte Spannungsdifferenz darstellt; dadurch gekennzeichnet,
   daß eine Einrichtung (7, 8, 9) zum Erfassen einer Arbeitsstrom-Widerstandsabfallkomponente vorgesehen ist und
   daß die Einrichtung (6) zum Korrigieren der am Arbeitsspalt für die elektrischen Entladungen anliegende Spannung ferner ein Element (63) zum Subtrahieren der Arbeitsstrom-Widerstandsabfallkomponente, die von der Einrichtung (7, 8, 9) zum Erfassen einer Arbeitsstrom-Widerstandsabfallkomponente erfaßt wird, von der Spannung längs des Arbeitsspalts für die elektrischen Entladungen aufweist, die die längs des Arbeitsspalts (12) erfaßte Spannungsdifferenz darstellt.

2. Gerät für eine elektrische Entladungsmaschine nach Anspruch 1, bei welchem die Einrichtung zum Erfassen einer Arbeitsstrom-Widerstandsabfallkomponente ein Widerstand (7) ist, der in Reihe mit der Einrichtung (4) zum Erfassen der Änderungsrate des elektrischen Stromes verbunden ist.

3. Gerät für eine elektrische Entladungsmaschine nach Anspruch 1, bei welchem die Einrichtung zum Erfassen einer Arbeitsstrom-Widerstandabfallkomponente ein Integrator (8) zum Integrieren der Änderungsrate des elektrischen Stromes ist, die von der Einrichtung (4) zum Erfassen der Änderungsrate des elektrischen Stromes erfaßt wird.

4. Gerät für eine elektrische Entladungsmaschine nach Anspruch 3, ferner aufweisend eine zweite Einrichtung (9) zum Erfassen einer Änderungsrate des elektrischen Stromes, wobei der Integrator (8) die Änderungsrate des elektrischen Stromes integriert, die von der zweiten Einrichtung (9) zum Erfassen einer Änderungsrate des elektrischen Stromes erfaßt wird.

Fig. 1

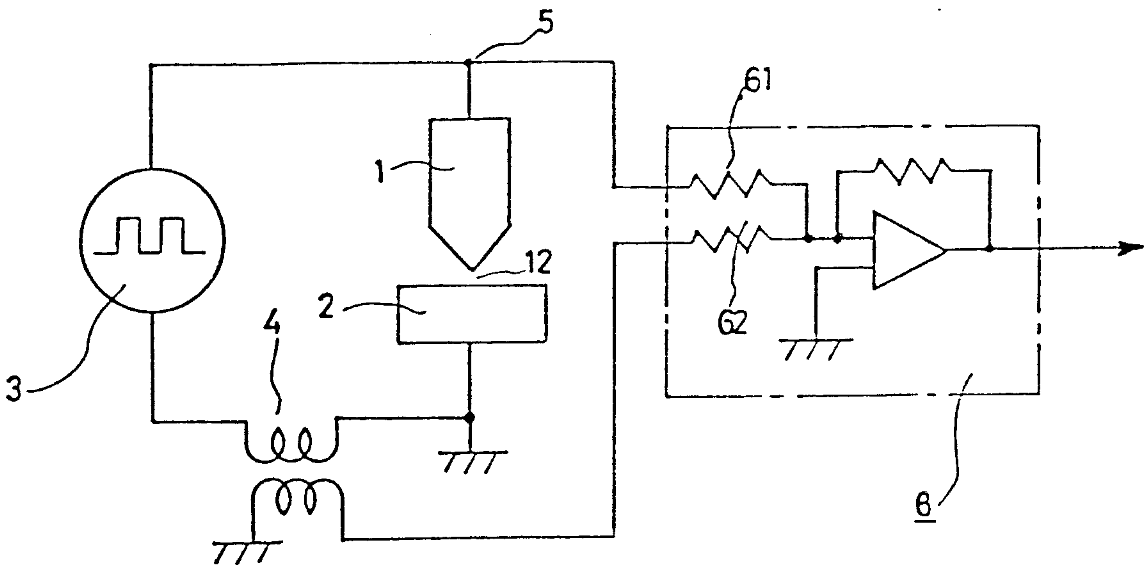


Fig. 2

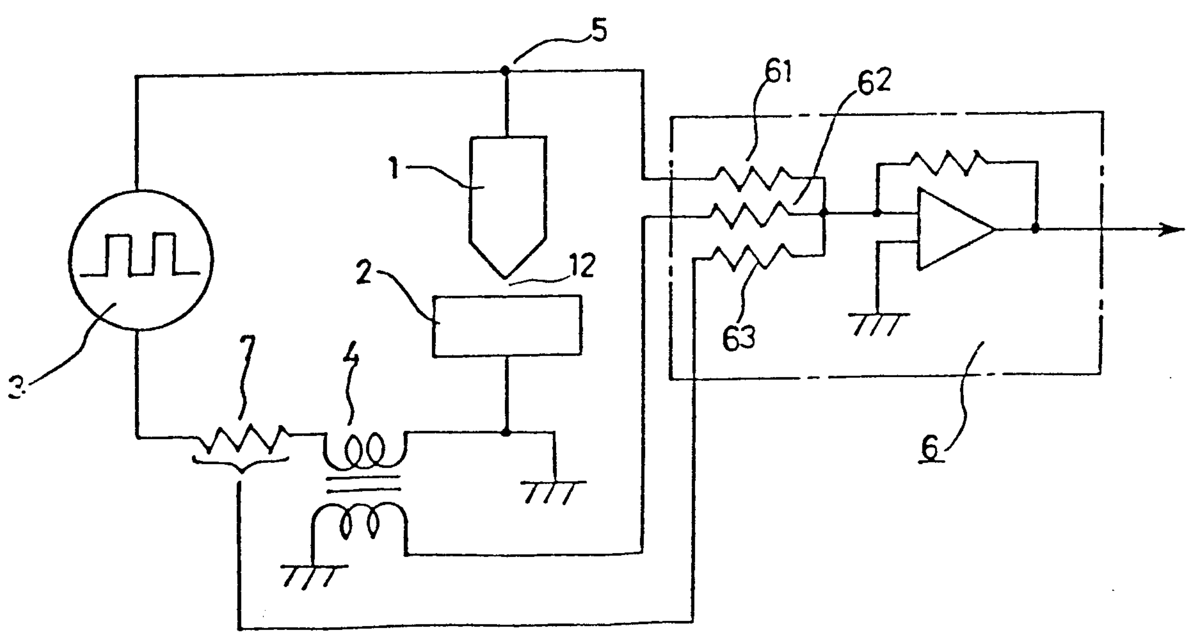

Fig. 3

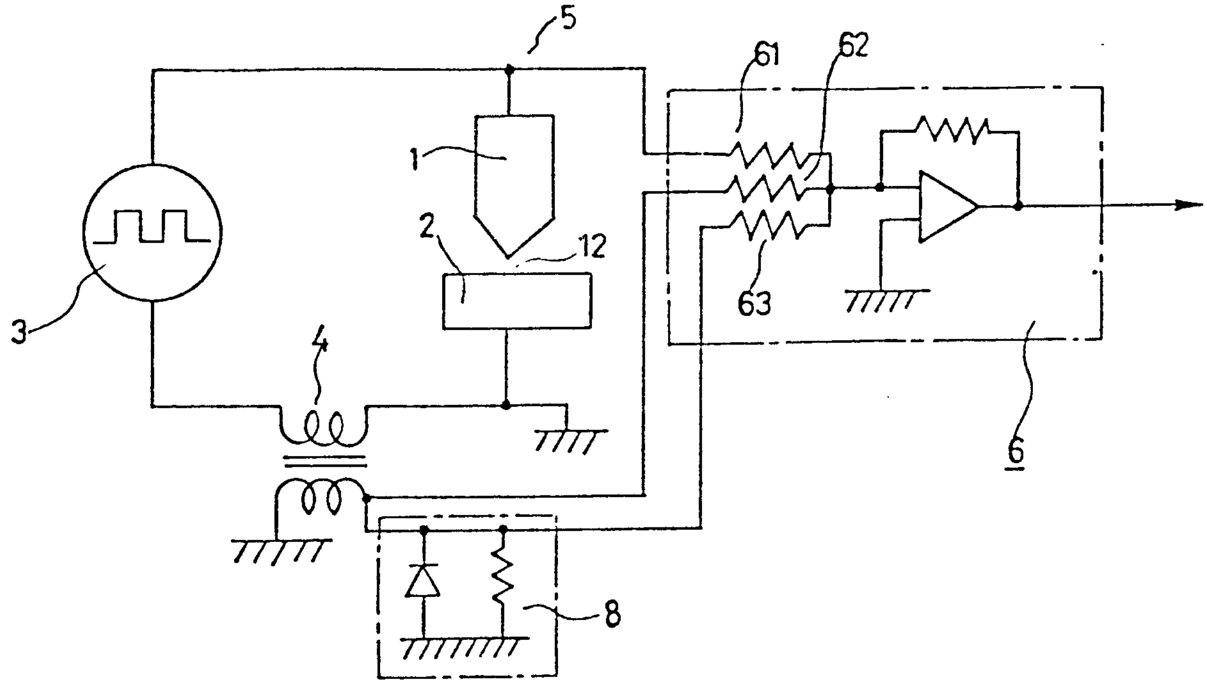


Fig. 4